# FASCICULE DE BREVET EUROPEEN

(11) **EP 0 959 242 B1**
(45) Date de publication et mention de la délivrance du brevet: **20.08.2003**
(21) Numéro de dépôt: 99420119.2
(22) Date de dépôt: 18.05.1999
(51) Int. Cl.: F02M 37/10

(54) **Ensemble de pompage de carburant et réservoir de véhicule automobile équipé d'un tel ensemble de pompage**
Brennstoffpumpeneinheit und Kraftfahrzeugbehälter ausgerüstet mit solch einer Pumpeneinheit
Fuel pump assembly and automotive vehicle fuel tank equipped with such a pump assembly

(30) Priorité: 19.05.1998 FR 9806485
(43) Date de publication de la demande: 24.11.1999
(73) Titulaire: AISAN BITRON EUROPE SA, 58000 Nevers (FR)
(72) Inventeur: Martin, Pascal, 42bis Boulevard Victor Hugo,58000 Nevers (FR)
(74) Mandataire: Myon, Gérard Jean-Pierre

(56) Documents cités:
- EP-A- 0 547 745
- DE-A- 19 509 143
- DE-A- 19 535 668
- DE-A- 19 619 992
- PATENT ABSTRACTS OF JAPAN vol. 98, no. 2, 30 janvier 1998 (1998-01-30) & JP 09 268957 A (DENSO CORP), 14 octobre 1997 (1997-10-14)

## Description

La présente invention a trait à un ensemble de pompage de carburant vers un moteur à combustion interne et à un réservoir de véhicule automobile équipé d'un tel ensemble de pompage.

Un tel ensemble de pompage de carburant comprend généralement une pompe électrique disposée, au moins partiellement, dans le volume intérieur d'un élément de réception d'une réserve de carburant, qui est constitué de manière habituelle par un bac. Cette pompe est destinée à l'aspiration et au refoulement sous pression du carburant vers un filtre de purification du carburant.

En aval de ce filtre, un organe de régulation dirige une partie du carburant filtré vers l'extérieur du réservoir et recycle l'autre partie vers le bac de réserve, de manière à maintenir dans ce dernier un volume de carburant suffisant pour assurer la continuité de l'alimentation du moteur, quelles que soient les fluctuations du niveau du carburant au sein du réservoir, notamment en fonction des pentes ou des accélérations du véhicule.

Des éléments de sécurité ou d'isolation acoustique annexes, ainsi que des moyens de mesure du niveau de carburant contenu dans le réservoir sont également prévus.

Certains des éléments énumérés ci-dessus pourraient être installés en dehors du réservoir du carburant. Cependant, il est particulièrement avantageux de pouvoir les y loger tous, y compris leur moyens de connexion, pour des raisons de sécurité. En effet, une éventuelle fuite ou rupture d'un composant est alors confinée dans le volume intérieur du réservoir.

Chacun des composants évoqués ci-dessus, pris séparément, occupe un volume difficilement réductible du fait des technologies et des matériaux employés. Par exemple, les dimensions du moteur électrique de la pompe sont déterminées par la puissance de pompage demandée. De plus, il est nécessaire que le volume du bac de réserve possède des dimensions adaptées pour garantir une autonomie suffisante.

A ces contingences dimensionnelles s'ajoute le fait que la position de certains composants encombrants est souvent imposée. Par exemple, la pompe et sa crépine doivent être disposées au plus près du fond du réservoir, alors que le dispositif de jaugeage ou de mesure de niveau de carburant, qui comprend généralement un bras solidaire d'un flotteur, doit se trouver dans une zone libre à l'intérieur du réservoir.

Par ailleurs, dans les véhicules modernes, la hauteur d'un réservoir d'un carburant peut être faible, par exemple inférieure à 20 cm, car le réservoir est positionné dans l'espace laissé libre par les éléments mécaniques ou de structure du véhicule.

On connaît, par DE-A-195 09 143, un ensemble de pompage, dans lequel la pompe est entourée par une chambre annulaire recevant le filtre. L'agencement décrit dans ce document, bien qu'il soit d'une compacité satisfaisante, selon la direction verticale, présente cependant certains inconvénients, en ce sens que le montage de cet ensemble de pompage sur le réservoir se révèle délicat.

Afin de pallier cet inconvénient, l'invention se propose de réaliser un ensemble de pompage qui, tout en présentant une grande compacité, en particulier selon la direction verticale, puisse être logée de façon aisée dans le réservoir.

A cet effet l'invention a pour objet un ensemble de pompage de carburant, selon la revendication 1.

L'invention a également pour objet un réservoir de carburant pour véhicule automobile, selon la revendication 10.

L'invention va être décrite ci-dessous, en référence aux dessins annexés, donnés uniquement à titre d'exemples non limitatifs et dans lesquels :
- la figure 1 est une vue en coupe longitudinale d'un réservoir de carburant d'un véhicule automobile, équipé d'un ensemble de pompage conforme à l'invention ;
- la figure 2 est une vue en coupe selon la ligne II-II à la figure 1 ;
- les figures 3 à 5 sont des vues en coupe partielle à plus grande échelle illustrant trois variantes de fixation d'un filtre équipant l'ensemble de pompage conforme à l'invention, au sein de l'enceinte le recevant ;
- la figure 6 est une vue partielle en perspective éclatée d'un logement dans lequel est reçue une ligne de retour de carburant équipant l'ensemble de pompage conforme à l'invention ;
- la figure 7 est une vue en coupe transversale du logement de la figure 6 ; et
- les figures 8 et 9 sont des vues en coupe partielle à grande échelle, illustrant un clapet de mise en communication du réservoir avec le logement des figures 6 et 7, dans ses positions respectives d'ouverture et de fermeture.

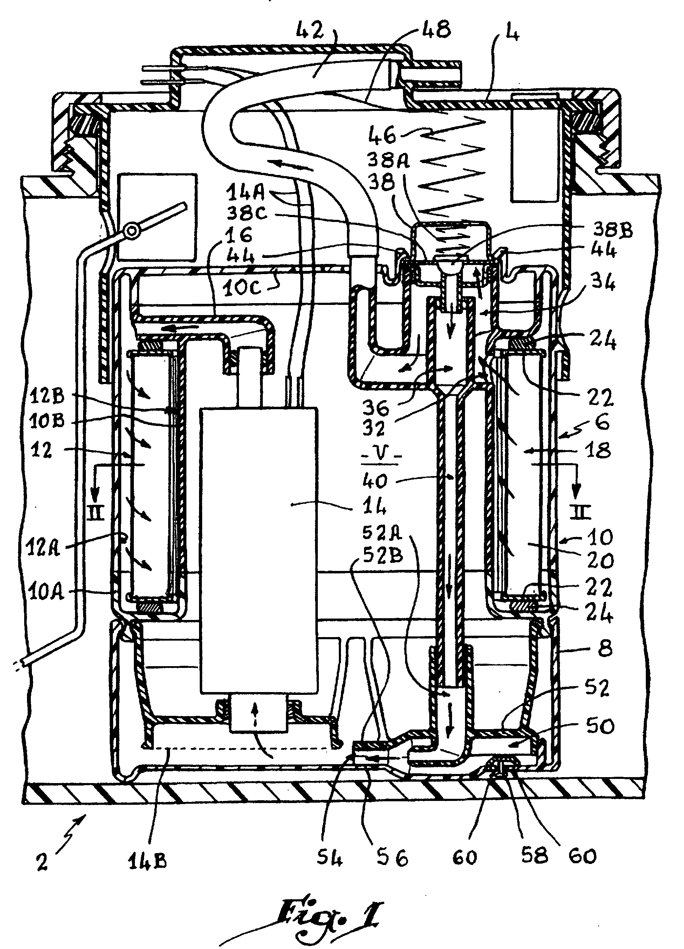

La figure 1 illustre un réservoir 2 de véhicule automobile, dont on a représenté uniquement la paroi de fond et la paroi supérieure. Cette dernière est pourvue d'une ouverture supérieure destinée de manière connue à la réception, avec étanchéité, d'une platine 4. Sur l'ensemble des figures, le trajet du carburant dans ce réservoir est matérialisé par des flèches.

Un réceptacle d'une réserve de carburant, désigné dans son ensemble par la référence 6, est logé à l'intérieur du réservoir 2 et repose sur le fond de celui-ci. Ce réceptacle 6 comprend un bac 8 en appui sur le fond du réservoir et un corps supérieur 10. Ce dernier est réalisé en trois parties, à savoir une partie inférieure 10A annulaire présentant, en coupe transversale, une forme de U, une partie intermédiaire 10B et une partie supérieure 10C. L'assemblage étanche de ces trois parties est réalisé par exemple par soudage par ultra-sons, par friction, par rotation ou encore au miroir.

La partie inférieure 10A du corps 10 est fixée, sur l'ensemble de sa périphérie, par encliquetage élastique sur le sommet du bac 8. La partie supérieure 10C du corps est pourvue d'une languette pénétrant dans une ouverture ménagée dans une face latérale de la platine 4, de manière à assujettir cette partie 10C avec cette platine, en laissant une liberté de translation permettant de s'adapter aux fluctuations de hauteur du réservoir à carburant.

Le corps 10 définit en particulier, à sa périphérie, une enceinte 12 annulaire de réception d'un filtre, comme cela sera décrit en détail dans ce qui suit.

Le réceptacle 6 définit un volume intérieur V dans lequel peut être stockée une réserve de carburant. Une pompe 14, équipée de manière connue de lignes 14A d'alimentation électrique et d'une crépine 14B, est disposée dans ce volume V. Une tubulure 16, reliée au refoulement de la pompe 14, débouche radialement dans la partie extérieure de l'enceinte annulaire 12.

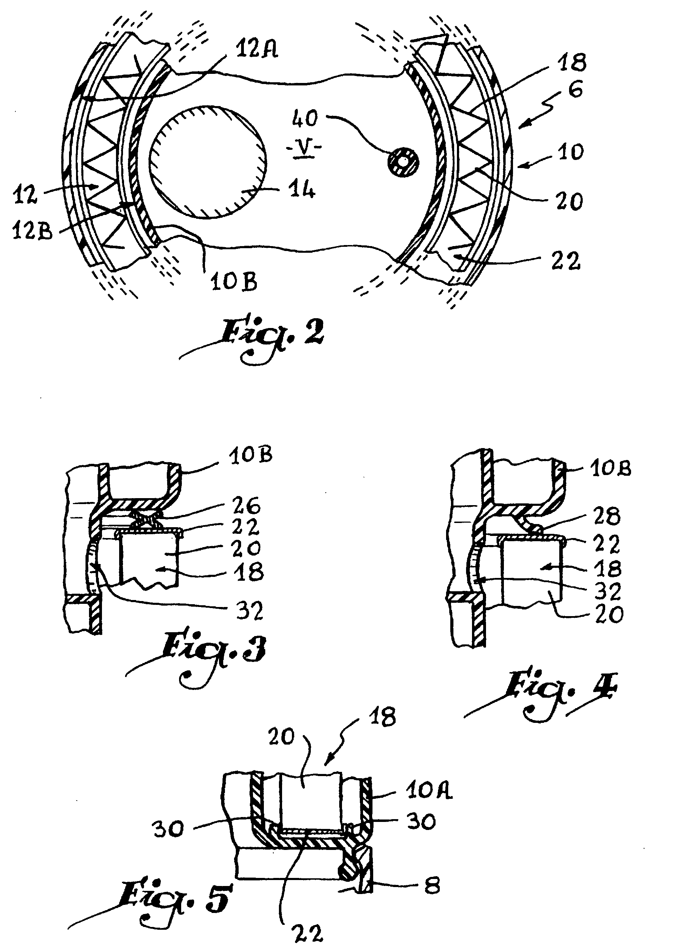

Cette dernière reçoit par ailleurs un filtre 18, dont l'agencement est plus particulièrement visible à la figure 2. Ce filtre 18 comporte une bande 20 pliée en forme d'accordéon et bordée, à ses extrémités inférieure et supérieure, par deux flasques 22.

La bande 20 est réalisée en un matériau filtrant, qui peut être constitué par un agglomérat de fibres mises en forme de feuille, ou bien encore un ensemble plus complexe comprenant plusieurs couches de matériaux différents dont l'association permet d'améliorer le pouvoir filtrant. Ce filtre 18 repose contre les parois inférieure et supérieure de l'enceinte annulaire 12, avec interposition de joints toriques 24, dans l'exemple de réalisation de la figure 1. Le filtre 18 délimite, à l'intérieur de l'enceinte annulaire 12, deux chambres respectivement extérieure et intérieure 12A et 12B. Du fait de la présence des joints 24, le carburant entrant dans la chambre extérieure 12A est mis en communication forcée avec la chambre intérieure 12B, par l'intermédiaire unique du filtre 18.

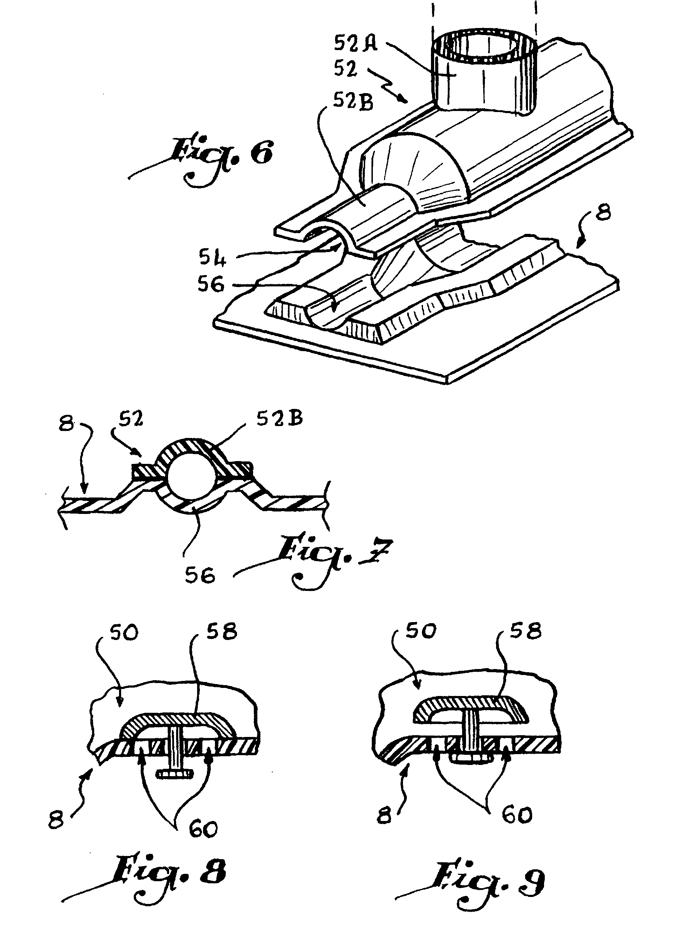

Les figures 3 à 5 présentent des variantes de réalisation de moyens assurant la communication forcée entre les chambres 12A et 12B. Comme le montre la figure 3, on peut prévoir une pièce 26 en matériau élastique, tel que du caoutchouc ou un matériau thermoplastique souple, par exemple de section en forme de croix. On peut également prévoir de munir les parois inférieure et supérieure de l'enceinte 12 d'une lèvre périphérique 28 venue de matière avec la partie intérieure 10B du corps 10. On peut également prévoir de munir cette partie 10A de deux nervures 30 faisant saillie verticalement, entre lesquelles sont coincés les flasques 22.

Il est également envisageable de s'affranchir de l'emploi de ces deux flasques et de coller directement la bande 20 en forme d'accordéon sur les parois inférieure et supérieure de l'enceinte. Un tel collage peut être réalisé par apport d'un liant ou par fusion du matériau thermoplastique constitutif du corps 10.

La chambre intérieure 12B de l'enceinte 12 est mise en communication, par l'intermédiaire d'un orifice 32, avec un logement annulaire 34, entourant un logement central 36 dont la fonction sera explicitée dans ce qui suit.

Le logement annulaire 34 débouche dans un organe de régulation 38. Ce dernier comprend un ressort taré 38A appuyant sur un pointeau 38B entouré par une membrane annulaire 38C. Lorsque la pression du carburant est supérieure à une valeur prédéterminée, la membrane 38C se soulève et ouvre le pointeau 38B, de sorte qu'une partie du carburant s'écoule dans le logement central 36 et se trouve dirigé vers une ligne de retour 40 qui renvoie cette partie du carburant vers le réceptacle 6.

La partie non recyclée par cette ligne 40 est dirigée, par l'intermédiaire d'un conduit de sortie 42, vers l'extérieur du réservoir. La partie 10C du corps possède, sur sa face supérieure, des ouvertures destinées au passage des lignes d'alimentation électrique 14A et du conduit de sortie 42. Cependant, cette surface supérieure n'est pas étanche, pour permettre aux vapeurs de carburant de s'échapper lors de la montée du niveau de carburant au sein du réceptacle.

Le clapet 38 est fixé par encliquetage entre l'extrémité supérieure de la partie 10B, définissant les parois du logement annulaire 34, et des pattes 44 dont est pourvue la partie 10C. Un ressort 46 exerce une pression sur le clapet 38 et tend donc à repousser l'ensemble du réceptacle 6 contre le fond du réservoir 2. Le ressort 46 est raccordé, par un fil conducteur 48, à la masse électrique du véhicule.

Etant donné que ce ressort 46 et que le corps du régulateur 38 sont constitués d'un matériau conducteur, par exemple métallique, cette disposition permet d'écouler les charges électrostatiques générées par le passage du carburant, avant qu'elles n'atteignent un potentiel électrique susceptible de générer un arc à même d'enflammer les vapeurs de carburant contenues dans le réservoir.

Différentes parties du corps 10 peuvent être réalisées en matières plastiques conductrices, par exemple chargées de fibres de carbone, afin de drainer vers le régulateur 38 les charges électrostatiques se formant autour du filtre 18.

La ligne de retour 40 débouche, à son extrémité inférieure en faisant référence à l'écoulement du carburant, dans un logement 50 ménagé au fond du bac 8 et se trouvant en communication fluidique avec le volume V de réserve de carburant. Ce logement 50 est formé par la coopération d'un couvercle 52 avec le fond du bac 8. Ce couvercle 52, qui comprend un conduit supérieur 52A destiné à recevoir l'ensemble de la ligne de retour 40 à son extrémité aval, débouche dans le logement, de manière à diriger le fluide vers un orifice de sortie 54 du logement 50.

Le couvercle 52, tout comme la crépine 14B, sont reliés à la collerette encliquetée sous le corps 10, par l'intermédiaire de plusieurs branches espacées les unes des autres. Ceci confère une certaine souplesse à la liaison ainsi réalisée, ce qui permet d'atténuer les vibrations en service.

L'orifice 54, qui est formé par assemblage de deux pièces complémentaires 52B, 56 en forme de tuile, appartenant respectivement au couvercle 52 et du fond du bac 8, possède une section inférieure à celle de l'ensemble du logement 50. Par ailleurs, un clapet 58, affectant une forme globale de champignon, est prévu dans la paroi inférieure du bac 8. Ce clapet 58 est destiné à mettre en communication fluidique, par coopération avec une ouverture annulaire 60, le logement 50 avec le réservoir 2.

Etant donné que la section de l'orifice de sortie 54 est rétrécie, le carburant s'écoule, au niveau de cet orifice, en voyant sa vitesse augmenter, ce qui crée une dépression dans le logement 50, par effet Venturi. Ceci a tendance à provoquer le soulèvement du clapet 58, montré à la figure 9 et permet l'aspiration du carburant depuis le réservoir 2 jusque dans le réservoir 50.

Le volume de carburant ainsi aspiré depuis le réservoir 2 ainsi que celui présent au sein du logement 50 sont donc dirigés vers le volume intérieur V du réceptacle 6. Le rôle du clapet 58 est d'empêcher que le carburant stocké dans ce réceptacle 6 ne se vidange lorsque le moteur du véhicule est arrêté ou lorsque le débit assuré par la ligne de retour 40 est insuffisant pour garantir une mise en communication suffisante entre le logement 50 et le volume V. Ceci se produit notamment lorsque le moteur est momentanément au maximum de sa consommation de carburant. Le clapet 58, qui suit les écarts de pression de part et d'autre de l'ouverture 60, agit ainsi comme une "diode" en ne laissant passer le carburant que dans un seul sens.

Il est à noter que le couvercle 52 et la crépine 14B, qui sont disposés côte à côte au voisinage du fond du bac 8, peuvent être réalisés en une seule pièce.

L'invention permet d'atteindre les objectifs précédemment mentionnés. Ainsi, le fait de disposer le filtre dans une enceinte formant au moins partiellement le réceptacle de réserve de carburant confère à l'ensemble de pompage de l'invention une compacité remarquable. L'ensemble de pompage conforme à l'invention est donc à même d'être logé dans un réservoir de carburant possédant une faible hauteur, tout en permettant l'emploi d'une pompe possédant des dimensions et donc une puissance importantes, et en garantissant un volume suffisant de réception de cette réserve de carburant.

L'utilisation d'une ligne de retour de carburant filtré disposée au moins partiellement dans le volume de réception de la réserve de carburant contribue à la compacité globale de l'ensemble de pompage, par comparaison avec l'art antérieur dans lequel une telle ligne est disposée sur le côté du bac de réception. De plus, l'agencement de l'invention permet à cette ligne de retour de pénétrer directement dans le volume intérieur du bac de réserve de carburant, par opposition à l'art antérieur dans lequel il était nécessaire de percer un orifice de passage dans la paroi latérale de ce bac.

L'emploi d'un filtre annulaire entourant la pompe électrique permet de conférer à ce filtre des dimensions importantes et donc un pouvoir de filtration élevé. Dans cet esprit, le fait de fixer une enceinte de réception du filtre de manière étanche sur le sommet d'un bac reposant sur le fond du réservoir est particulièrement avantageux. Le volume de réception de la réserve de carburant est alors particulièrement conséquent, dans la mesure où ce volume est défini non seulement par les parois internes du bac mais également par celles de l'enceinte annulaire de réception du filtre.

## Revendications

1. Ensemble de pompage de carburant, destiné à être immergé dans un réservoir (2) à carburant d'un véhicule automobile, cet ensemble de pompage comprenant un réceptacle (6) pour réserve de carburant, une pompe (14) disposée au moins en partie dans le volume intérieur (V) dudit réceptacle (6), un filtre annulaire (18) comprenant une entrée reliée au refoulement de la pompe et une sortie reliée à un organe de répartition (38), dont la sortie est reliée, pour partie au volume intérieur (V) dudit réceptacle (6) par l'intermédiaire d'une ligne de retour (40), ladite ligne de retour (40) débouchant dans un logement (50) placé au fond dudit réceptacle (6) et communiquant avec ledit volume intérieur (V) dudit réceptacle (6), et pour partie à un conduit (42) dirigé vers l'extérieur du réservoir (2), ledit filtre étant disposé dans une enceinte (12) délimitant au moins partiellement le réceptacle (6) de la réserve de carburant, **caractérisé en ce que** ladite ligne de retour (40) est disposée au moins partiellement à l'intérieur dudit filtre annulaire (18).

2. Ensemble de pompage selon la revendication 1, **caractérisé en ce que** ledit filtre annulaire (18) entoure ladite pompe (14).

3. Ensemble de pompage suivant la revendication 1 ou 2, **caractérisé en ce que** des moyens de dépression (54) du logement (50) et un organe (58) de mise en communication sélective dudit logement (50) avec le réservoir (2) sont prévus, ledit organe (58) ne laissant passer le carburant que lorsque la pression régnant à l'intérieur du logement (50) est inférieure ou égale à celle régnant au fond du réservoir (2).

4. Ensemble de pompage suivant la revendication 3, **caractérisé en ce que** les moyens de dépression du logement (50) comprennent un orifice de sortie (54) dudit logement (50) mettant en communication ce dernier avec le volume intérieur (V) du réceptacle (6), la section dudit orifice de sortie (54) se rétrécissant vers l'aval, en faisant référence à l'écoulement du carburant.

5. Ensemble de pompage suivant l'une des revendications 1 à 4, **caractérisé en ce que** ladite enceinte (12) est fixée de manière étanche sur au moins une partie de l'extrémité supérieure d'un bac (8) reposant sur le fond du réservoir (2).

6. Ensemble de pompage suivant l'une des revendications 1 à 5, **caractérisé en ce que** ladite enceinte (12) appartient à un corps (10) fixé par encliquetage élastique sur le sommet dudit bac (8), ledit corps étant réalisé en trois parties (10A, 10B, 10C) assemblées les unes aux autres de manière étanche, notamment par soudage.

7. Ensemble de pompage suivant la revendication 6, **caractérisé en ce que** ladite enceinte (12) comprend deux chambres concentriques intérieure (12B) et extérieure (12A), ledit filtre (18) séparant lesdites chambres.

8. Ensemble de pompage suivant la revendication 7, **caractérisé en ce que** lesdites chambres intérieure (12B) et extérieure (12A) sont disposées respectivement en aval et en amont, en faisant référence à l'écoulement du carburant, ladite chambre intérieure (12B) étant reliée à l'organe de répartition (38) et ladite chambre extérieure (12A) étant reliée au refoulement de la pompe (14).

9. Ensemble de pompage suivant l'une quelconque des revendications 6 à 8, **caractérisé en ce que** ledit filtre (18) comprend une bande (20) repliée en accordéon.

10. Réservoir de carburant (2) pour véhicule automobile, **caractérisé en ce qu'**il comprend un ensemble de pompage (14, 18, 38) selon l'une quelconque des revendications précédentes.

## Patentansprüche

1. Kraftstoff-Pumpeneinheit, welche dazu bestimmt ist, in einen Kraftstofftank (2) eines Kraftfahrzeuges eingetaucht zu werden, wobei die Pumpeneinheit einen Kraftstoff-Reservebehälter (6), eine Pumpe (14), welche wenigstens teilweise in dem Innenvolumen (V) des Behälters (6) angeordnet ist, einen ringförmigen Filter (18), welcher einen an die Förderung der Pumpe angeschlossenen Eingang und einen an ein Verteilerorgan (38) angeschlossenen Ausgang aufweist, hat, dessen Ausgang zum Teil an das Innenvolumen (V) des Behälters (6) mittels einer Rückleitung (40), welche Rückleitung (40) in eine Aufnahme (50) mündet, die am Boden des Behälters (6) angeordnet ist und mit dem Innenvolumen (V) des Behälters (6) in Verbindung steht, und zum Teil an eine zur Außenseite des Tanks (2) gerichtete Leitung (42) angeschlossen ist, wobei der Filter in einem umschlossenen Raum (12) angeordnet ist, welcher zumindest teilweise den Kraftstoff-Reservebehälter (6) festlegt, **dadurch gekennzeichnet, daß** die Rückleitung (40) zumindest teilweise im Inneren des ringförmigen Filters (18) angeordnet ist.

2. Pumpeneinheit nach Anspruch 1, **dadurch gekennzeichnet, daß** der ringförmige Filter (18) die Pumpe (14) umgibt.

3. Pumpeneinheit nach Anspruch 1 oder 2, **dadurch gekennzeichnet, daß** muldenförmige Einrichtungen (54) der Aufnahme (50) und ein Organ (58) zum wahlweisen Verbinden der Aufnahme (50) mit dem Tank (2) vorgesehen sind, wobei das Organ (58) den Kraftstoff nur dann passieren läßt, wenn der im Inneren der Aufnahme (50) herrschende Druck kleiner oder gleich demjenigen ist, welcher am Boden des Tanks (2) herrscht.

4. Pumpeneinheit nach Anspruch 3, **dadurch gekennzeichnet, daß** die muldenförmigen Einrichtungen der Aufnahme (50) eine Austrittsöffnung (54) der Aufnahme (50) aufweisen, welche die letztere mit dem Innenvolumen (V) des Behälters (6) verbindet, wobei der Querschnitt der Austrittsöffnung (54) sich mit Bezug auf die Strömung des Kraftstoffs stromabwärts verjüngt.

5. Pumpeneinheit nach einem der Ansprüche 1 bis 4, **dadurch gekennzeichnet, daß** der umschlossene Raum (12) dicht an wenigstens einem Teil des oberen Endes eines auf dem Boden des Tanks (2) ruhenden Kastens (8) befestigt ist.

6. Pumpeneinheit nach einem der Ansprüche 1 bis 5, **dadurch gekennzeichnet, daß** der umschlossene Raum (12) zu einem Körper (10) gehört, welcher durch elastische Verrastung an der Oberseite des Kastens (8) befestigt ist und in drei Teilen (10A, 10B, 10C) ausgeführt ist, wobei die einen dicht mit den anderen insbesondere durch Verschweißen verbunden sind.

7. Pumpeneinheit nach Anspruch 6, **dadurch gekennzeichnet, daß** der umschlossene Raum (12) zwei konzentrische, innere (12B) und äußere (12A) Kammern aufweist, wobei der Filter (18) die Kammern voneinander trennt.

8. Pumpeneinheit nach Anspruch 7, **dadurch gekennzeichnet, daß** die inneren Kammern (12B) und äußeren (12A) Kammern mit Bezug auf die Strömung des Kraftstoffs im einzelnen stromabwärts und stromaufwärts angeordnet sind, wobei die innere Kammer (12B) mit dem Verteilerorgan (38) und die äußere Kammer (12A) mit der Förderung der Pumpe (14) verbunden ist.

9. Pumpeneinheit nach einem der Ansprüche 6 bis 8, **dadurch gekennzeichnet, daß** der Filter (18) eine ziehharmonikaförmig gefaltete Einfassung (20) aufweist.

10. Kraftstofftank (2) für Kraftfahrzeuge, **dadurch gekennzeichnet, daß** er eine Pumpeneinheit (14, 18, 38) nach einem der vorhergehenden Ansprüche aufweist.

## Claims

1. Fuel pumping assembly intended to be immersed in a fuel tank (2) of a motor vehicle, this pumping assembly comprising a receptacle (6) for a reserve of fuel, a pump (14) arranged at least partly in the interior volume (V) of the said receptacle (6), an annular filter (18) comprising an inlet connected to the delivery side of the pump and an outlet connected to a distribution member (38), the outlet of which is connected, in part, to the interior volume (V) of the said receptacle (6) via a return line (40), the said return line (40) opening into a housing (50) placed at the bottom of the said receptacle (6) and communicating with the said interior volume (V) of the said receptacle (6), and partly to a pipe (42) directed towards the outside of the tank (2), the said filter being arranged in an enclosure (12) at least partially delimiting the receptacle (6) of the reserve of fuel,
**characterized in that** the said return line (40) is arranged at least partially inside the said annular filter (18).

2. Pumping assembly according to Claim 1, **characterized in that** the said annular filter (18) surrounds the said pump (14).

3. Pumping assembly according to Claim 1 or 2, **characterized in that** means (54) for depressing the housing (50) and a member (58) for selectively placing the said housing (50) in communication with the tank (2) are provided, the said member (58) allowing fuel to pass only when the pressure inside the housing (50) is lower than or equal to the pressure at the bottom of the tank (2).

4. Pumping assembly according to Claim 3, **characterized in that** the means for depressing the housing (50) comprise an outlet orifice (54) from the said housing (50) placing the latter in communication with the interior volume (V) of the receptacle (6), the cross section of the said outlet orifice (54) narrowing in the downstream direction with reference to the direction in which the fuel flows.

5. Pumping assembly according to one of Claims 1 to 4, **characterized in that** the said enclosure (12) is fixed with sealing to at least part of the upper end of a pan (8) resting on the bottom of the tank (2).

6. Pumping assembly according to one of Claims 1 to 5, **characterized in that** the said enclosure (12) belongs to a body (10) elastically snap-fastened onto the top of the said pan (8), the said body being made in three parts (10A, 10B, 10C) joined together in a sealed manner, particularly by welding.

7. Pumping assembly according to Claim 6, **characterized in that** the said enclosure (12) comprises two concentric chambers, an inner one (12B) and an outer one (12A), the said filter (18) separating the said chambers.

8. Pumping assembly according to Claim 7, **characterized in that** the said inner (12B) and outer (12A) chambers are arranged respectively downstream and upstream, with reference to the direction in which the fuel flows, the said inner chamber (12B) being connected to the distribution member (38) and the said outer chamber (12A) being connected to the delivery side of the pump (14).

9. Pumping assembly according to any one of Claims 6 to 8, **characterized in that** the said filter (18) comprises a concertina-folded strip (20).

10. Fuel tank (2) for a motor vehicle, **characterized in that** it comprises a pumping assembly (14, 18, 38) according to any one of the preceding claims.
